# EUROPÄISCHE PATENTSCHRIFT

(11) **EP 2 141 365 B1**
(45) Veröffentlichungstag und Bekanntmachung des Hinweises auf die Patenterteilung: **01.08.2012**
(21) Anmeldenummer: 09004864.6
(22) Anmeldetag: 02.04.2009
(51) Int. Cl.: F16B 19/00

(54) **Spannstift**
Dowel pin
Goupille

(30) Priorität: 05.07.2008 DE 102008031853
(43) Veröffentlichungstag der Anmeldung: 06.01.2010
(73) Patentinhaber: Wilhelm Hedtmann GmbH & Co. KG., 58099 Hagen (DE)
(72) Erfinder: Hedtmann, Stefan, 58099 Hagen (DE); Bartos, Siegfried, 58089 Hagen (DE)
(74) Vertreter: Köchling, Conrad-Joachim

(56) Entgegenhaltungen:
- EP-A2- 1 319 849
- DE-A1- 1 400 836
- DE-C- 416 839
- FR-A1- 2 611 241
- US-A- 2 499 315

## Beschreibung

Die Erfindung betrifft einen Spannstift, bestehend aus einer metallischen, zylindrischen Federhülse mit durchgehendem Längsschlitz und einer Fase an beiden Enden der Hülse.

Derartige Spannstifte sind im Stand der Technik bekannt. So ist beispielsweise in der EN ISO 13337 ein derartiger Spannstift in leichter Ausführung und in der EN ISO 8752 ein Spannstift in schwerer Ausführung normiert. Gemäß der EN ISO 13337 ist für Spannstifte mit einem Nenndurchmesser d₁ ≥ 10 mm auch nur eine Phase an einem Ende der Hülse zulässig.

Die längsgeschlitzten Spannstifte haben gegenüber der Aufnahmebohrung ein Übermaß, so dass sich nach dem Eintreiben ein rüttelfester Sitz ergibt.

Derartige Spannstifte sind zur Aufnahme von Stoß- und Schlagarbeit geeignet. Sie werden als Pass-, Befestigungs- und Sicherungsstifte verwendet. Sofern Scherkräfte zu übertragen sind und die Schrauben und Bolzen entlastet und klein gehalten werden sollen, können derartige Spannstifte auch als Schrauben- und Bolzenhülsen (Scherhülsen) verwendet werden.

Die Spannstifte werden üblicherweise aus Stahl, beispielsweise Federstahl oder aus nicht korrodierendem Edelstahl hergestellt. Aus Kostengründen werden diese aber häufig aus normalem Federstahl gefertigt und anschließend verzinkt.

Die am Ende der Hülse ausgebildete Fase dient dazu, das Eintreiben in eine entsprechende Bohrung oder dergleichen zu erleichtern. Der Längsschlitz derartiger Spannstifte weist eine über den Verlauf der Länge gleich bleibende Schlitzbreite auf. Hierdurch ist ein Ineinanderschieben der Stifte im Bereich der Schlitze ermöglicht, das so genannte Verketten, so dass ein vollautomatisches Zuführen und auch ein Veredeln im Trommelverfahren nicht ohne weiteres ermöglicht ist. Beispielsweise entsteht durch das Ineinanderschieben der Stifte beim Veredeln im Trommelverfahren eine ungewünschte Schwarzfleckigkeit.

Aus der DE 1 400 836 B ist eine Spannhülse bekannt, bei der die Hülsenenden bis etwa zur gegenseitigen Berührung der Schlitzkanten konisch nach innen eingezogen sind.

Eine solche Spannhülse ist in dieser Form nicht herstellbar. Die Herstellung einer solchen Spannhülse führt zu dem im Stand der Technik bekannten, so genannten "Plus-Stift", bei dem die Schlitzbreite und gleichzeitig der Außendurchmesser der Hülse in Längsrichtung von der Mitte in Richtung der Enden reduziert ist, um ein durch Ineinanderschieben der Stifte gebildetes Verketten zu vermeiden. Die Spannstifte haben dabei eine tonnenförmige Ausbildung.

Hierbei ist es nachteilig, dass der Traganteil durch die Tonnenform wesentlich verringert ist, da hierdurch der Reibwert und somit die wichtige Austreibkraft zugleich verringert ist, weil die Spannstifte nicht über ihre gesamte Länge tragen. Der Verkettung wird aber hierbei entgegen gewirkt.

Weiter ist es bei dem im Stand der Technik bekannten oben beschriebenen Standard-Lösungen nachteilig, dass die äußeren Stirnkanten im Fasenbereich hoch stehen und über den von der Fase aufgespannten Konusmantel vorragen, also nicht dem Fasenwinkel folgen, und somit beim Eintreiben des Stiftes in die Aufnahmebohrung Beschädigungen oder Spanbildungen an der Aufnahmebohrung entstehen können.

Ausgehend von diesem Stand der Technik liegt der Erfindung die Aufgabe zugrunde, einen Spannstift der eingangs genannten Art zu schaffen, der eine Spanbildung beim Eintreiben in die entsprechende Bohrung vermeidet, bei dem ein Ineinanderschieben mehrerer Stifte, also ein Verketten verhindert ist, der über seine gesamte Länge trägt, wenn er in eine entsprechende Bohrung eingetrieben ist, und der dabei kostengünstig und einfach herstellbar ist.

Zur Lösung dieser Aufgabe schlägt die Erfindung vor, dass die beiden dem Längsschlitz benachbarten Endbereiche der Fasen derart verformt sind, dass der zwischen den Endbereichen verbleibende Schlitzspalt kleiner ist als die oder gleich der Wandstärke der Federhülse ist, und dass die verformten Endbereiche der Fasen in der Umfangsfluchtlinie des von der Fase aufgespannten Konusmantels liegen oder gering gegenüber der Umfangsfluchtlinie zurückliegen.

Insbesondere ist dabei bevorzugt vorgesehen, dass die stirnseitige Spitze der jeweiligen Fase durch Aufbringen einer axialen Druckkraft derart nach innen angedrückt ist, dass der Schlitz im Bereich der Fasen durch den verformten Fasenteil verjüngt ist.

Dadurch, dass im dem Schlitz benachbarten Endbereich der Fasen keine über die Umfangsfluchtlinie des Konusmantels der Fase vorragenden Kanten am Stift ausgebildet sind, ist ein schnelles und einfaches Eintreiben des Spannstiftes in die Aufnahmebohrung ohne das Auftreten einer Beschädigung beziehungsweise Spanbildung an der Laibung der Bohrung ermöglicht. Dadurch, dass der Schlitzspalt im Bereich zwischen den Endbereichen kleiner ist als die oder gleich der Wandstärke der Federhülse ist, ist ein Ineinanderschieben der Stifte, also ein Verketten verhindert, so dass eine vollautomatische Zuführung und auch eine automatische und fehlerfreie Veredelung im Trommelverfahren, ohne das Auftreten von Schwarzfleckigkeit, ermöglicht ist.

Da der Außendurchmesser des Spannstiftes über die gesamte Länge der Mantelfläche gleich bleibt, trägt er über seine gesamte Länge und weist eine besonders hohe Vorspannkraft auf, so dass insbesondere ein Herausfallen des Spannstiftes aus der Aufnahmebohrung bei dynamisch belasteten Verbindungen wirksam verhindert ist. Zudem wird durch den konstanten Außendurchmesser der Reibwert und die damit verbundene Austreibkraft über die gesamte Länge sichergestellt.

Ein derartiger Spannstift ist kostengünstig und einfach herstellbar und weist eine hohe Lebensdauer auf.

Derartige Spannstifte sind gegebenenfalls leicht wieder austreibbar und können somit mehrfach wieder verwendet werden.

Die Erfindung ist nachstehend anhand eines Ausführungsbeispieles erläutert.

Es zeigt:
- Figur 1: einen erfindungsgemäßen Spannstift in Draufsicht auf den Längsschlitz;
- Figur 2: desgleichen aus Figur 1 in Seitenansicht;
- Figur 3: desgleichen in Stirnansicht;
- Figuren 4 bis 6: Ansichten eines bekannten Spannstiftes nach EN ISO 13337;
- Figuren 7 bis 9: Ansichten eines bekannten "Plus-Stiftes" mit verjüngten Endbereichen.

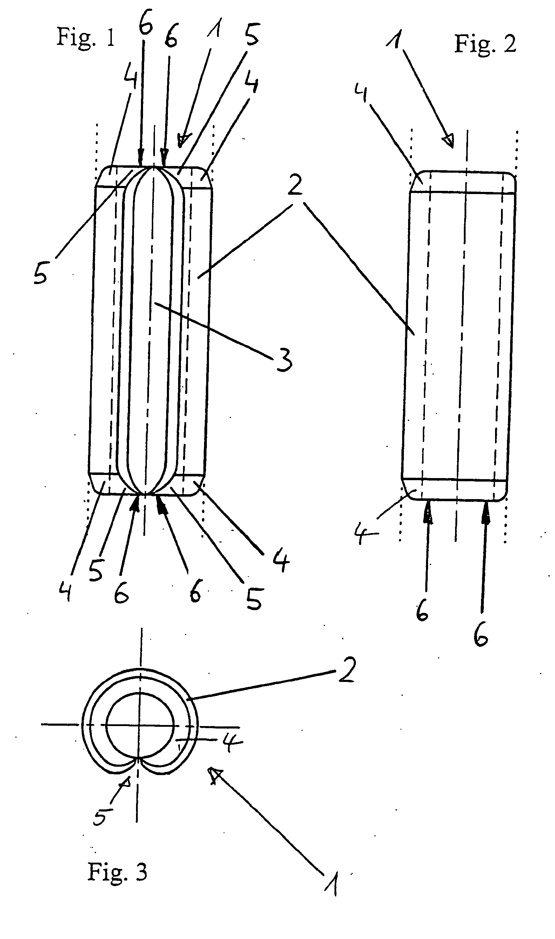

In den Figuren 1 bis 3 ist ein erfindungsgemäßer Spannstift 1 gezeigt. Der Spannstift 1 besteht aus einer metallischen, zylindrischen Federhülse 2 mit durchgehendem Längsschlitz 3.

Erfindungsgemäß ist an jedem Ende der Hülse 2 eine Fase 4 ausgebildet, deren Außenfläche eine konische Mantelfläche bildet. Die beiden dem Längsschlitz 3 benachbarten Endbereiche 5 der Fasen 4 sind derart verformt, dass der zwischen den Endbereichen 5 verbleibende Schlitzspalt kleiner ist als die Wandstärke der Federhülse 2. Alternativ kann der Schlitzspalt gleich der Wandstärke der Federhülse 2 ausgebildet sein. Die Endbereiche 5 der Fasen 4 liegen gering gegenüber der Umfangsfluchtlinie des Konusmantels der Fase 4 zurück, wie insbesondere in Figur 3 anschaulich gezeigt ist. Alternativ können die Endbereiche 5 der Fasen 4 auch in der Umfangsfluchtlinie der Federhülse 2 liegen.

Im Ausführungsbeispiel ist die stirnseitige Spitze 6 der jeweiligen Fase 4 durch Aufbringen einer axialen Druckkraft derart nach innen angedrückt, dass der Schlitz 3 im Bereich der Fasen 4 verjüngt ist und die dem Schlitz 3 benachbarten Enden 5 der Fasen 4 nach innen, vorzugsweise nach radial innen, verformt sind.

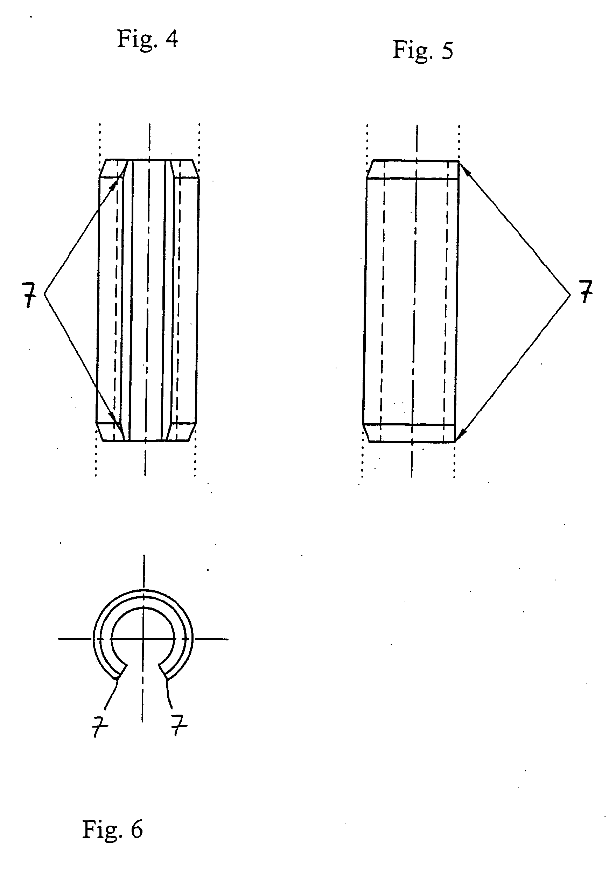

Im Gegensatz zu dem im Stand der Technik bekannten Spannstift gemäß Figur 4 bis Figur 6 weist der erfindungsgemäße Spannstift 1 nach Figur 1 bis Figur 3 keine nach radial außen über die Umfangsfluchtlinie der konischen Mantelfläche der Fase 4 hervorragenden Bereiche auf. Diese sind beim im Stand der Technik bekannten Spannstift insbesondere aus Figur 4 und Figur 5 bei 7 ersichtlich. Ein derartiger erfindungsgemäßer Spannstift kann also auf herkömmliche Art und Weise beispielsweise mit einem Hammer in eine Bohrung eingetrieben werden, ohne dabei die Bohrung durch hervorstehende Endbereiche (7) der Fase 4 zu beschädigen.

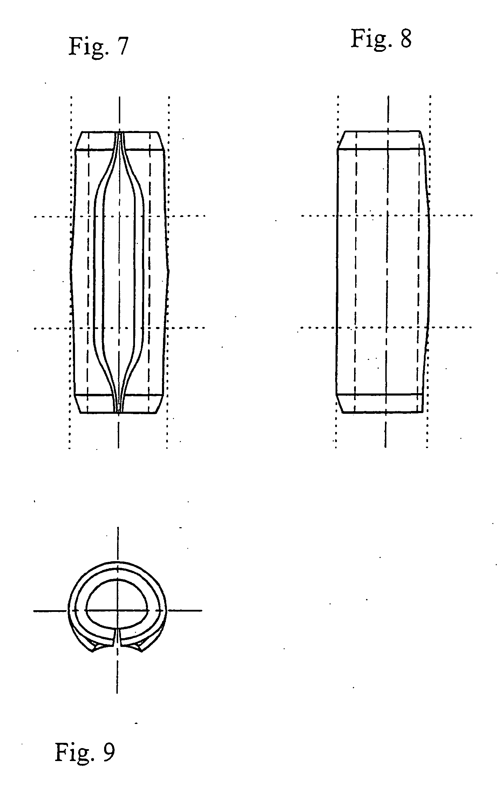

In den Figuren 7 bis 9 ist ein weiterer im Stand der Technik bekannter, so genannter "Plus-Stift" gezeigt, dessen Außendurchmesser der Hülse und dadurch bedingt dessen Schlitzbreite im Verlauf in Richtung der Enden der Hülse und im Bereich der Fasen verjüngt ist, so dass der Stift insgesamt eine Tonnenform hat. Dieser "Plus-Stift" kann mittels der verjüngten Bereiche zwar leicht und einfach in eine Bohrung eingetrieben werden, weist aber aufgrund der Tonnenform der Hülse nur eine geringe Vorspannkraft gegenüber der Laibung der Aufnahmebohrung, in die der Spannstift eingeführt ist, auf, weil er nicht über seine gesamte Länge trägt.

Hierdurch ist eine ungewünschte Lageänderung innerhalb der Bohrung oder ein Herausfallen, insbesondere bei dynamischen Belastungen ermöglicht.

Der erfindungsgemäße, in den Figuren 1 bis 3 gezeigte Spannstift weist über den gesamten Verlauf der Länge der Hülse 2 eine gleich bleibende Vorspannkraft auf, so dass insbesondere bei dynamisch belasteten Verbindungen der Spannstift nicht aus der Aufnahmebohrung wandern oder herausfallen kann und über seine gesamte Länge trägt.

## Patentansprüche

1. Spannstift (1), bestehend aus einer metallischen, zylindrischen Federhülse (2) mit durchgehendem Längsschlitz (3) und einer Fase (4) an beiden Enden der Hülse (2), **dadurch gekennzeichnet, dass** die beiden dem Längsschlitz (3) benachbarten Endbereiche (5) der Fasen (4) derart verformt sind, dass der zwischen den Endbereichen (5) verbleibende Schlitzspalt kleiner ist als die oder gleich der Wandstärke der Federhülse (2) ist, und dass die verformten Endbereiche (5) der Fasen (4) in der Umfangsfluchtlinie des von der Fase (4) aufgespannten Konusmantels liegen oder gering gegenüber der Umfangsfluchtlinie zurückliegen.

2. Spannstift (1) nach Anspruch 1, **dadurch gekennzeichnet, dass** die stirnseitige Spitze (6) der jeweiligen Fase (4) durch Aufbringen einer axialen Druckkraft derart nach innen angedrückt ist, dass der Schlitz (3) im Bereich der Fasen (4) durch den verformten Fasenteil verjüngt ist.

## Claims

1. A clamping pin (1), comprising a metallic, cylindrical spring sleeve (2) with a continuous longitudinal slot (3) and a chamfer (4) at both ends of the sleeve (2), **characterized in that** the two end regions (5) of the chamfers (4) adjacent to the longitudinal slot (3) are deformed in such a manner that the slot gap remaining between the end regions (5) is smaller than or equal to the wall thickness of the spring sleeve (2), and that the deformed end regions (5) of the chamfers (4) lie in the circumferential alignment line of the cone jacket formed by the chamfer (4) or slightly lag behind with respect to the circumferential alignment line.

2. The clamping pin (1) according to claim 1, **characterized in that** the front-side tip (6) of the respective chamfer (4) is pressed inwardly, by applying an axial pressure force, in such a manner that the slot (3) is tapered off in the region of the chamfers (4) by the deformed chamfer portion.

## Revendications

1. Goujon de serrage (1), comprenant une douille élastique (2) métallique et cylindrique avec une fente longitudinale (3) continue et un chanfrein (4) aux deux extrémités de la douille (2), **caractérisé en ce que** les deux régions d'extrémité (5) du chanfrein (4) voisines à la fente longitudinale (3) sont déformées de telle manière que l'espace de fente qui reste entre les régions d'extrémité (5) soit inférieur ou identique à l'épaisseur de la paroi de la douille élastique (2), et que les régions d'extrémité (5) déformées des chanfreins (4) se trouvent dans la ligne d'alignement périphérique de l'enveloppe conique formée par le chanfrein (4) ou légèrement derrière la ligne d'alignement périphérique.

2. Goujon de serrage (1) selon la revendication 1, **caractérisé en ce que** la pointe frontale (6) du chanfrein respectif (4) est poussée vers l'intérieur par application d'une force de compression axiale de telle manière que la fente (3) se rétrécit par la partie de chanfrein déformée dans la région des chanfreins (4).
